# EUROPÄISCHE PATENTANMELDUNG

(11) **EP 0 855 264 A1**
(43) Veröffentlichungstag der Anmeldung: **29.07.1998**
(21) Anmeldenummer: 97810036.0
(22) Anmeldetag: 27.01.1997
(51) Int. Cl.: B29C 65/18, B65B 7/28

(54) **Verfahren und Vorrichtung zum thermischen Verbinden eines Basisteils einer Verpackung mit einer Deckfolie, sowie Verfahren und Vorrichtung zum Verpacken von Kontaktlinsen**

(71) Anmelder: Novartis AG, 4058 Basel (CH); Koch Maschinenbau GmbH, 72285 Pfalzgrafenweiler-Bösingen (DE)
(72) Erfinder: Die Erfindernennung liegt noch nicht vor

(57) **Zusammenfassung**

Bei einem Verfahren zum thermischen Verbinden eines Basisteils (3) einer Verpackung mit einer Deckfolie (F), insbesondere zum Verschweissen oder Versiegeln eines Basisteils einer Verpackung für Kontaktlinsen mit einer Deckfolie, werden die der Deckfolie (F) zugewandte Kontaktfläche des Basisteils (3) und die entsprechende dem Basisteil zugewandte Kontaktfläche der Deckfolie (F) entlang einer Verbindungsfläche mechanisch gegeneinander gedrückt. Während der Erzeugung des mechanischen Drucks entlang der Verbindungsfläche findet gleichzeitig eine Einwirkung von Wärme auf die Verbindungsfläche statt, sodass die Kontaktflächen von Basisteil (3) und Deckfolie (F) entlang der Verbindungsfläche thermisch miteinander verbunden werden. Zum Erzeugen des mechanischen Drucks und zum Einwirken der Wärme auf die Verbindungsfläche wird eine Kontaktplatte (70) mit geringer Wärmekapazität verwendet, die beim thermischen Verbinden gegen die der Kontaktfläche abgewandte Fläche der Deckfolie (F) gedrückt wird. Die Temperatur der Kontaktplatte wird in unmittelbarer Nähe der Deckfolie gemessen, und bei einer Abweichung der gemessenen Temperatur aus einem vorgegebenen Toleranzbereich um eine Solltemperatur heraus wird die Temperatur der Kontaktplatte (70) innerhalb sehr kurzer Zeit wieder in den vorgegebenen Toleranzbereich um die Solltemperatur hinein nachgeregelt.

## Beschreibung

Die Erfindung betrifft ein Verfahren und eine Vorrichtung zum thermischen Verbinden eines Basisteils einer Verpackung mit einer Deckfolie, sowie ein Verfahren und eine Vorrichtung zum Verpacken von Kontaktlinsen gemäss dem Oberbegriff des jeweiligen unabhängigen Patentanspruchs.

Verfahren und Vorrichtungen der obengenannten Art sind heutzutage in einer Vielzahl von Varianten bereits im Einsatz, wenn es darum geht, ein spezielles Gut, insbesondere eine Kontaktlinse, in einer Verpackung dicht abgeschlossen zu verpacken. Dies erfolgt in der Regel derart, dass eine Kontaktlinse in eine Vertiefung eines Basisteils einer Verpackung eingebracht wird, eine vorgegebene Menge einer Aufbewahrungsflüssigket in die Vertiefung hinein dispensiert wird, anschliessend eine thermisch mit dem Basisteil der Verpackung verbindbare Deckfolie auf die Verpackung aufgelegt wird und schliesslich die Deckfolie thermisch mit der Verpackung verbunden wird. Anschliessend kann noch eine Sterilisierung erfolgen. Die Verpackung mit der Kontaktlinse kann dann an den Kunden bzw. an den Optiker oder Augenarzt abgegeben werden.

Es ist ohne weiteres klar, dass speziell im Bereich der Verpackung von Kontaktlinsen, aber z.B. auch im Bereich von Lebensmitteln, Pharmaka, medizinischen Artikeln und in einigen anderen Bereichen dabei an die Verpackung bestimmte Anforderungen gestellt werden. Diese Anforderungen können insbesondere die Dichtigkeit (gegen Auslaufen oder gegen Eindringen von Fremdstoffen) der Verpackung betreffen, sie können auch die Haltekraft der Deckfolie an dem Basisteil der Verpackung, die Undurchlässigkeit der Verpackung für gewisse Stoffe, oder auch die erforderliche Kraft zum Abziehen der Folie ("Peeling force") betreffen. Um solche Anforderungen an die Verpackung erfüllen zu können, müssen die Parameter beim thermischen Verbinden von Basisteil und Deckfolie (Zeit, Druck, Temperatur) sich stets innerhalb vorgegebener Grenzen bewegen.

In der Verpackungstechnik gibt es verschiedene Techniken, um zwei Materialien miteinander zu verbinden. Unter anderem sind dies das Kleben mit Heiss- oder Kaltleim, das Schweissen und das Siegeln. Während beim Kleben die Verbindungsstelle zumeist nur punkt- oder linienförmig ist, eignen sich das Schweissen oder das Siegeln vor allem auch für flächige Verbindungsstellen. Der Unterschied zwischen dem Schweissen und dem Siegeln liegt in der Art und der Beschaffenheit der zu verbindenden Materialien. Vom Schweissen redet man in der Verpackungstechnik dann, wenn zwei gleiche Materialien unter Einwirkung von Druck und Temperatur (ohne die Mitwirkung von zusätzlichen weiteren Materialien) miteinander verbunden werden. Beim Siegeln hingegen ist mindestens einer der Materialpartner mit einer siegelfähigen Schicht versehen. Bei beiden Verfahren erfolgt also die Verbindung der Materialpartner unter Einwirkung von Druck und Temperatur, allerdings werden beim Siegeln in der Regel unterschiedliche Materialien ebenfalls miteinander verbunden. Die häufigste Anwendung findet das Siegeln im Bereich der Blisterverpackungen. Hier werden vor allem klare, tiefziehfähige Kunststoffolien mit einer Karton-Karte versiegelt, wobei zumeist der Karton mit einer siegelfähigen Schicht aus Siegellack oder z.B. mit einer Polyehtylenfolie beschichtet ist.

Bei der Verpackung von Kontaktlinsen wird üblicherweise ein Basisteil, das z.B. durch Spritzgiessen hergestellt werden kann, mit einer Folie verbunden, die mit einer siegelfähigen Schicht kaschiert ist. Die Verbindung von Basisteil und Kontaktlinse erfolgt nach dem Einbringen der Linse in eine entsprechende Vertiefung des Basisteils und nach dem Dispensieren von Aufbewahrungsflüssigkeit, z.B. Saline, in die Vertiefung hinein. Eine derartige Verpackung ist beispielsweise in der EP-A-0,680,895 beschrieben. Diese Verpackung soll nun dicht sein gegen Eindringen von Fremdstoffen von aussen und soll ein Auslaufen der Saline verhindern. Ferner muss die Haltekraft der Deckfolie an der Verpackung so gross sein, dass die Packung beim Sterilisieren, was üblicherweise in einem Autoklaven erfolgt, nicht beschädigt wird. Weiterhin soll die Abziehkraft ("Peeling force") zum Abziehen der Folie vom Basisteil, also zum Öffnen der Verpackung, einen Maximalwert nicht überschreiten, damit die Verpackung vom Benutzer mit vernünftigem Aufwand geöffnet werden kann.

Bekannte Vorrichtungen zum thermischen Verbinden eines Basisteils mit einer Deckfolie, wie sie beispielsweise beim Versiegeln von Blisterverpackungen eingesetzt werden, sind im wesentlichen wie folgt aufgebaut. In einer Aufnahmeeinrichung bzw. Gegenhalter sind mehrere Vertiefungen zur Aufnahme der Basisteile vorgesehen. Die Aufnahmeeinrichtung ist mit einer Stelleinrichtung verbunden, welche z.B. mittels eines pneumatischen Antriebs in Richtung auf eine Verbindungseinheit zu bewegt werden kann. Die Verbindungseinheit umfasst eine grossvolumige metallische Heizplatte mit einer grossen Wärmekapazität - sie ist ebenfalls mittels einer weiteren Stelleinheit, die z.B. einen pneumatischen Antrieb umfassen kann, in Richtung auf die Aufnahmeeinrichtung bzw. den Gegenhalter zu bewegbar. In der Heizplatte der Verbindungseinheit sind mehrere Heizelemente angeordnet, welche die Heizplatte auf eine vorgegebene Temperatur aufheizen. Unterhalb der Heizplatte, also auf die Aufnahmeeinrichtung bzw. den Gegenhalter zuweisend, ist eine Siegelplatte mit der Heizplatte losbar verbunden. An dieser Siegelplatte sind mehrere Kontaktelemente, sogenannte Nutzen, vorgesehen. Die Stirnseite dieser Nutzen ist die eigentliche Andruckfläche, die beim Siegeln in Kontakt mit der Deckfolie kommt. Diese Andruckfläche bestimmt im wesentlichen auch die Gestalt der Verbindungsfläche, entlang der die Deckfolie mit dem Basisteil versiegelt wird. In der Heizplatte und in der Siegelplatte sind Temperaturfühler vorgesehen. Diese Temperaturfühler sind mit einer Regelung verbunden, mit welcher die Einschaltdauer der Heizelemente geregelt wird.

Diese bekannte Vorrichtung funktioniert derart, dass die Basisteile in den Vertiefungen der Aufnahmeeinrichtung (Gegenhalter) bereitgestellt werden und die Deckfolie auf diesen Basisteilen aufliegt. Mittels der Stelleinheiten zum Bewegen der Aufnahmeeinrichtung (Gegenhalter) und der Verbindungseinheit werden diese nun aufeinander zu bewegt, bis die Andruckflächen der Nutzen mit einem vorgegebenen Druck die Deckfolie gegen die Basisteile drücken. Beim Andrücken der Folie gegen das Basisteil mittels der Nutzen wird die siegelfähige Schicht erwärmt und unter Einwirkung von Druck und Temperatur verbinden sich Basisteil und Deckfolie miteinander.

Diese bekannte Vorrichtung ist im Grunde funktionstüchtig, weist aber insbesondere im Hinblick darauf, dass beim Verpacken von Kontaktlinsen die obengenannten Anforderungen erfüllt sein müssen, noch Nachteile auf. Die Bewegung der Aufnahmeeinrichtung und/oder der Verbindungseinheit muss so erfolgen, dass die Flächen der Aufnahmeeinrichtung und der Verbindungseinheit, die den Siegeldruck auf die Verpackung übertragen, sehr genau parallel zueinander sind. Schon geringe Abweichungen hiervon können dazu führen, dass erhebliche Schwankungen des Siegeldrucks auftreten und damit eine nicht den genannten Anforderungen entsprechende Versiegelung die Folge sein kann.

Da der Siegeldruck direkt über die Stelleinheiten aufgebracht wird, muss die jeweilige Stelleinheit bzw. ihr Antrieb sehr genau arbeiten. Je nach Art der Stelleinheit (mechanisch, hydraulisch, oder - wie oben bereits erwähnt - pneumatisch) ist hierzu eine unter Umständen sehr aufwendige Steuerung erforderlich.

Die Heizelemente in der Heizplatte und die Andruckfläche (also die Stirnseite der Nutzen) haben eine relativ grossen Abstand voneinander. Durch die grosse Wärmekapazität (Trägheit) der grossvolumigen Heizplatte und durch die Wärmekapazität (Trägheit) der Siegelplatte vergeht eine relativ lange Zeit, bis an der Andruckfläche eine Temperaturänderung eintritt. Eine schnelle Änderung der Temperatur an der für die Qualität der Versiegelung entscheidenden Stelle, nämlich an der Andruckfläche, ist somit nicht möglich. Ausserdem steigt die Temperatur an der Andruckfläche auch dann noch über einen ganzen Zeitraum an, wenn die Heizelemente nach einem Heizvorgang wieder abgeschaltet werden.

Selbst mit Hilfe der Temperaturfühler ist es sehr schwer, eine genaue Regelung der Temperatur an der Andruckfläche (Stirnfläche des Nutzens) zu erreichen. Regelt man die Wärmezufuhr lediglich aufgrund des in der Siegelplatte so nahe wie möglich an den Nutzen angeordneten Temperaturfühlers, neigt das System Heizplatte/Siegelplatte zum Überschwingen, da es sehr träge ist. Wenn also beispielsweise der Temperaturfühler meldet, dass die Temperatur am Ort des Temperaturfühlers (also nahe am Nutzen) zu niedrig ist, erhalten die Heizelemente das Signal zum Heizen. Da das System Heizplatte/Siegelplatte aber sehr träge ist, stellt sich am Ort des Temperaturfühlers nicht gleich eine Temperaturerhöhung ein. Infolgedessen meldet der Temperaturfühler, dass noch weiter geheizt werden muss. Dies hat zur Folge, dass die Heizplatte weiter beheizt wird, und selbst dann, wenn die Temperatur am Ort des Temperaturfühlers nach einiger Zeit die gewünschte Temperatur erreicht hat, wird durch die zuvor der Heizplatte zugeführte Wärme die Temperatur der Heizplatte dann noch weiter an die Siegelplatte weitergegeben und damit an die Nutzen und deren Andruckflächen, sodass eine Temperaturüberhöhung (Überschwingen) die Folge ist. Regelt man die Wärmezufuhr lediglich aufgrund des in der Heizplatte angeordneten Temperaturfühlers, so können die Heizelemente zwar relativ genau geregelt werden (und somit kann eine thermische Beschädigung - ein Durchbrennen - der Heizelemente zwar verhindert werden), die tatsächliche Temperatur an der Andruckfläche liegt jedoch um einiges tiefer als die Temperatur an den Heizelementen.

Regelt man die Wärmezufuhr mit Hilfe beider Temperaturfühler sowohl, so neigt das System Heizplatte/Siegelplatte aufgrund seiner Trägheit immer noch zum Überschwingen. Wenn man das Einschwingverhalten kennt und bei der Wärmezufuhr berücksichtigt, also ein Überschwingen zu vermeiden versucht, ist wiederum eine schnelle Änderung der Temperatur an der entscheidenden Stelle, nämlich an der Andruckfläche (Stirnfläche der Nutzen) nicht möglich, weil die Wärmezufuhr aufgrund der grossen Wärmekapazität (Trägheit) entsprechend langsamer erfolgen muss. Fällt ein Heizelement aus, so wird dies nicht zwingend bemerkt, da die anderen Heizelemente die Funktion des ausgefallenen Heizelements mit übernehmen. Die Temperaturverteilung an den verschiedenen Andruckflächen (Stirnflächen der Nutzen) wird dadurch aber sehr viel ungenauer. Versiegelungen, die den obengenannten Anforderungen nicht entsprechen, sind dann die Folge. Insbesondere bei der vollautomatischen Fertigung und Verpackung von grossen Stückzahlen von Kontaktlinsen ist dies aber nicht tolerierbar.

Es ist daher eine Aufgabe der Erfindung, ein Verfahren und eine Vorrichtung zum thermischen Verbinden eines Basisteils und einer Deckfolie einer Verpackung vorzuschlagen, insbesondere ein Verfahren zum Verschweissen oder Versiegeln eines Basisteils und einer Deckfolie einer Verpackung für Kontaktlinsen, welches die genannten Nachteile nicht aufweist. Ferner soll ein Verfahren zur Verpackung von Kontaktlinsen vorgeschlagen werden, mit welchem es möglich ist, auch bei der vollautomatischen Fertigung und Verpackung von grossen Stückzahlen von Kontaktlinsen Verpackungen zu erhalten, die den genannten Anforderungen entsprechen.

Daher wird bei dem erfindungsgemässen Verfahren zum thermischen Verbinden zum Erzeugen des mechanischen Drucks und zum Einwirken der Wärme auf die Verbindungsfläche eine Kontaktplatte mit geringer Wärmekapazität verwendet wird, die beim thermischen Verbinden gegen die der Kontaktfläche abgewandte Fläche der Deckfolie gedrückt wird. Ferner wird die Temperatur der Kontaktplatte in unmittelbarer Nähe der Deckfolie gemessen. Bei einer Abweichung der gemessenen Temperatur aus einem vorgegebenen Toleranzbereich um eine Solltemperatur heraus wird die Temperatur der Kontaktplatte innerhalb sehr kurzer Zeit wieder in den vorgegebenen Toleranzbereich um die Solltemperatur hinein nachgeregelt. Dies ist nur möglich aufgrund der geringen Wärmekapazität der Kontaktplatte, die demzufolge nur eine geringe Trägheit aufweist. Mit anderen Worten heisst dies, dass dann, wenn die in der Nähe der Deckfolie gemessene Temperatur ausserhalb des Toleranzbereichs um die Solltemperatur herum liegt, und demzufolge z.B. nachgeheizt wird, die Temperatur in der Nähe der Deckfolie sehr rasch wieder in den Toleranzbereich hinein geführt wird. Ein grosses Überschwingen wird ebenfalls vermieden.

Vorteilhafte Ausführungsvarianten des erfindungsgemässen Verfahrens sind in den abhängigen Patentansprüchen charakterisiert. Sie betreffen z.B. die Massnahme, dass beim thermischen Verbinden entlang der gesamten Verbindungsfläche ein vorgegebener, im wesentlichen gleichmässiger mechanischer Druck erzeugt wird. Dies kann beispielsweise derart erreicht werden, dass zur Erzeugung des im wesentlichen gleichmässigen mechanischen Drucks entlang der Verbindungsfläche ein gelenkig aufgehängter Nutzen verwendet wird, an dessen dem Basisteil der Verpackung zugewandten Ende die Kontaktplatte angeordnet ist. Zu diesem Zweck kann ein gegen die Kraft einer Feder in Richtung auf ein räumlich fest angeordnetes Gestell zu bewegbar aufgehängter Nutzen verwendet werden.

Weitere vorteilhafte Ausführungsvarianten des Verfahrens betreffen die Massnahmen, dass mehrere Basisteile in einer Aufnahmeeinrichtung gleichzeitig bereitgestellt werden, dass mehrere an einem gemeinsamen ortsfesten Gestell gelenkig aufgehängte Nutzen verwendet werden, und dass mehrere Basisteile gleichzeitig mit einer Deckfolie thermisch verbunden werden, indem die Aufnahmeeinrichtung in Richtung auf die Nutzen zu bzw. auf das Gestell zu bewegt wird, an dem die Nutzen aufgehängt sind, sodass durch die Übertragung von Wärme und Druck auf die Kontaktflächen von Basisteil und Deckfolie diese entlang der Verbindungsfläche miteinander thermisch verbunden werden.

Die erfindungemässe Vorrichtung zeichnet sich dadurch aus, dass der Nutzen eine heizbare Kontaktplatte mit geringer Wärmekapazität aufweist, die an dem der Aufnahmeeinrichtung zugewandten Ende des Nutzens angeordnet ist und beim thermischen Verbinden entlang der Verbindungsfläche gegen die der Kontaktfläche abgewandte Fläche der Deckfolie drückt. An dieser Kontaktplatte ist in unmittelbarer Nähe der Andruckfläche, die gegen die Deckfolie drückt, ein Temperaturfühler angeordnet, der die Temperatur der Kontaktplatte misst und bei einer Abweichung der Temperatur aus einem vorgegebenen Toleranzbereich um die Solltemperatur heraus sofort ein entsprechendes Signal erzeugt und an eine schnelle Regelung weiterleitet, welche die Temperatur der Kontaktplatte sofort wieder in den vorgegebenen Toleranzbereich hinein regelt. Die Vorteile entsprechen den bereits im Zusammenhang mit dem erfindungsgemässen Verfahren genannten Vorteilen.

Vorteilhafte Ausführungsbeispiele ergeben sich aus den Merkmalen der abhängigen Ansprüche. Sie betreffen beispielsweise die Tatsache, dass der Nutzen gelenkig aufgehängt sein kann. Ferner kann der Nutzen auf der der Aufnahmeeinrichtung abgewandten Fläche der Kontaktplatte ein Heizelement aufweisen, welches die Kontaktplatte heizt, sowie einen Isolierkörper, um die von dem Heizelement erzeugte Wärme im wesentlichen vollständig an die Kontaktplatte abzugeben und nicht an die Umgebung. Das Heizelement kann als dünnes Keramikplättchen ausgebildet sein, auf welchem eine Widerstandsheizung mit zwei metallischen Anschlussflächen einerseits und diese zwei Anschlussflächen miteinander leiterbahnartig verbindende Widerstandsleitungen andererseits vorgesehen sind. Diese Ausgestaltung der Heizung ist konstruktiv besonders einfach und ausserdem zuverlässig. Die Spannungsversorgung zur Versorgung der Widerstandsheizung mit elektrischer Spannung umfasst in einem Ausführungsbeispiel zwei gefederte metallische Stifte, die durch den Isolierkörper hindurch geführt sind und deren Enden auf die Anschlussflächen der Wiederstandsheizung stossen.

Weitere Ausführungsbeispiele betreffen die Tatsache, dass der Nutzen gegen die Kraft einer Feder in Richtung auf ein räumlich fest angeordnetes Gestell zu bewegbar aufgehängt ist. Wieder andere Ausführungsbeispiele zeichnen sich dadurch aus, dass mehrere Nutzen vorgesehen sind, die an einem gemeinsamen ortsfesten Gestell aufgehängt sind. Ferner weist die Aufnahmeeinrichtung mehrere Vertiefungen zur Aufnahme von Basisteilen einer Verpackung auf, und die Aufnahmeeinrichtung ist mit sämtlichen Basisteilen mittels einer Stelleinheit in Richtung der Nutzen und auf das Gestell zu, an dem die Nutzen aufgehängt sind, bewegbar.

Das erfindungsgemässen Verfahren zum Verpacken von Kontaktlinsen zeichnet sich dadurch aus, dass zum thermischen Verbinden von Basisteil und Deckfolie eines der vorgenannten Verfahren zum thermischen Verbinden von Basisteil und Deckfolie eingesetzt wird. Dabei wird in einer vorteilhaften Ausführungsvarinate nach dem thermischen Verbinden von Basisteil und Deckfolie die so hergestellte Verpackung sterilisiert. In bevorzugter Weise wird zum Sterilisieren die Verpackung einem Autoklaven zugeführt.

Dabei können mehrere Verpackungen vor dem Sterilisieren zunächst einem Magazin zugeführt werden und die in dem Magazin enthaltenen Verpackungen dann anschliessend gemeinsam sterilisiert werden.

Die erfindungsgemässe Vorrichtung zum Verpacken von Kontaktlinsen zeichnet sich dadurch aus, dass die Einrichtung zum thermischen Verbinden von Basisteil und Deckfolie eine der vorgenannten Ausführungsbeispiele der Vorrichtungen zum thermischen Verbinden von Basisteil und Deckfolie ist. In einem Ausführungsbeispiel umfasst die Vorrichtung dabei eine Einrichtung zum Sterilisieren der Verpackung nach dem Verbinden von Basisteil und Deckfolie. Diese Einrichtung zum Sterilisieren der Verpackung kann beispielsweise ein Autoklav sein. Dabei kann ein Magazin vorgesehen sein, dem mehrere Verpackungen vor dem Sterilisieren zugeführt werden, und dieses Magazin wird dann in den Autoklaven zum Sterilisieren der Verpackungen eingebracht.

Im folgenden wird die Erfindung anhand der Zeichnung näher erläutert. Es zeigen, teilweise in schematischer Darstellung und/oder im Schnitt:
- Fig. 1: ein Ausführungsbeispiel einer Aufnahmeeinrichtung zur Aufnahme von Basisteilen einer Verpackung für Kontaktlinsen,
- Fig. 2: ein Ausführungsbeispiel eines Basisteils einer Verpackung für Kontaktlinsen, welches von der Aufnahmeeinrichtung gemäss Fig. 1 aufgenommen werden kann,
- Fig. 3: ein Ausführungsbeispiel einer Vorrichtung zum Verpacken von Kontaktlinsen,
- Fig. 4: die Einzelheit IV der Fig. 3 zur Erläuterung des Einbringens von Kontaktlinsen in die Basisteile der Verpackungen,
- Fig. 5: die Einzelheit V der Fig. 3 zur Erläuterung des Einlaufens der Aufnahmeeinrichtung in die Vorrichtung zum Verbinden von Basisteil und Deckfolie,
- Fig. 6: ein Ausführungsbeispiel der Vorrichtung zum Verbinden von Basisteilen einer Verpackung für Kontaktlinsen mit einer Deckfolie, in Ruhestellung bzw. in der Stellung, in welcher die Basisteile mit der Deckfolie verbunden werden,
- Fig. 7: die Einzelheit VII der Fig. 6,
- Fig. 8: ein Ausführungsbeispiel eines Nutzens und dessen Aufhängung,
- Fig. 9: eine Ansicht der Kontaktplatte des Nutzens von unten,
- Fig. 10: eine Ansicht der Kontaktplatte des Nutzens von oben, mit eingeklebter Keramik-Heizplatte,
- Fig. 11: einen Schnitt gemäss der Linie XI-XI der Fig. 10
und
- Fig. 12: das in Fig. 6 gezeigte Ausführungsbeispiel der Vorrichtung zum Verbinden von Basisteilen und Deckfolie, jedoch in einer Schnittdarstellung in Transportichtung.

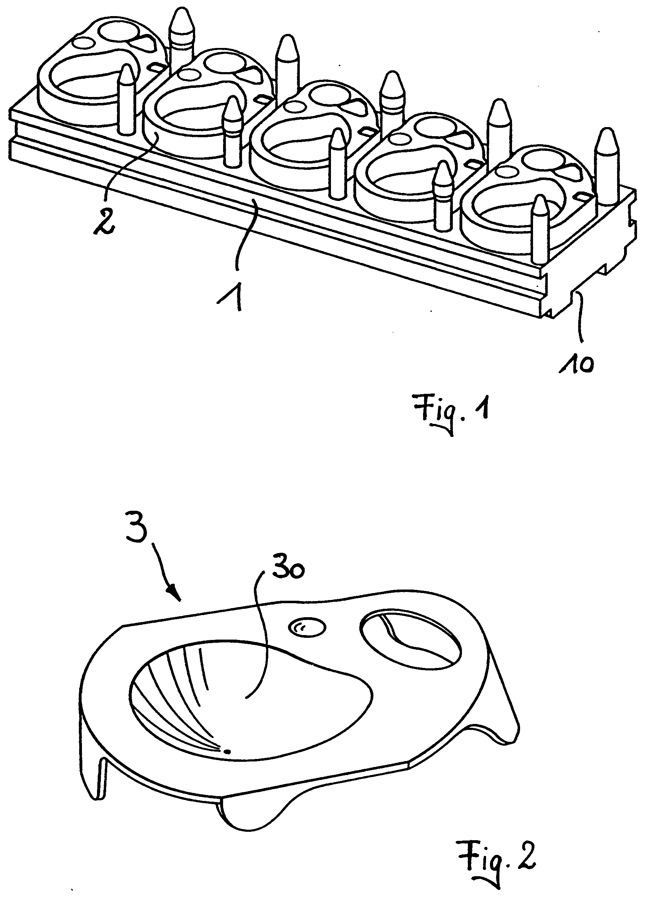

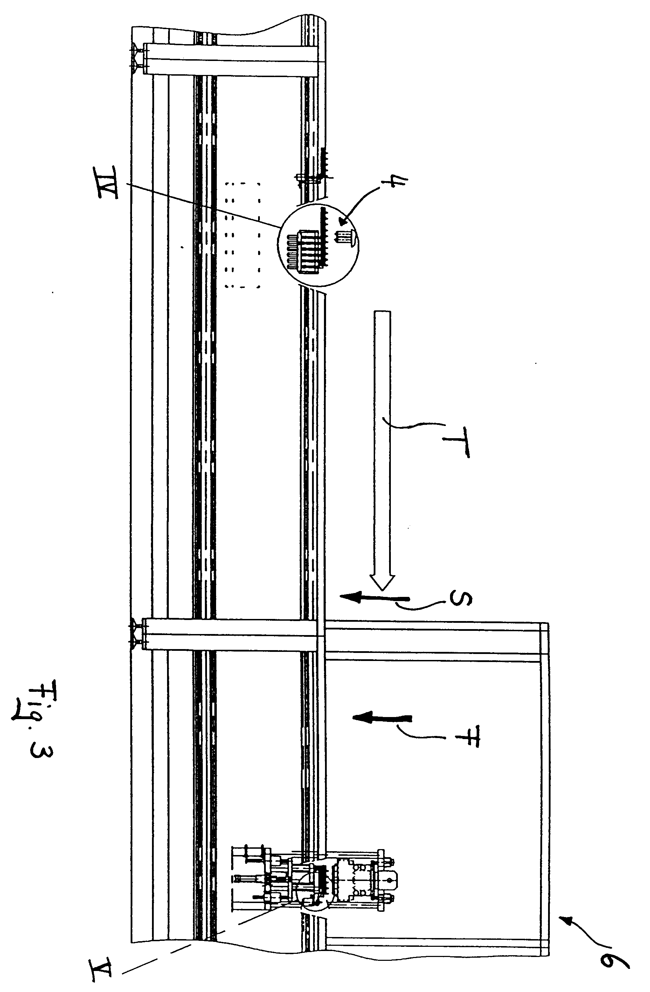

Das in Fig. 1 gezeigte Ausführungsbeispiel einer Aufnahmeeinrichtung umfasst im wesentlichen einen - z.B. metallischen - Träger 1, auf dem mehrere einzelne Aufnahmeelemente 2 in einer wohldefinierten Position angeordnet sind, hier sind dies beispielsweise fünf Aufnahmelemente 2, die auf dem Träger 1 angeordnet sind. Die Aufnahmeelemente können beispielsweise aus eloxiertem Aluminium oder verchromtem Stahl hergestellt sein. Jedes dieser Aufnahmeelemente 2 ist zur Aufnahme eines Basisteils einer Verpackung für Kontaktlinsen geeignet. Der Träger 1 und die Aufnahmeelemente 2 können zusammen auch ein einziges Teil bilden.

Ein solches Basisteil 3, welches von den Aufnahmeelementen 2 aufgenommen werden kann, ist in Fig. 2 dargestellt. Diese Basisteile 3, die beispielsweise durch Spritzgiessen hergestellt werden können, weisen eine tropfenförmige Vertiefung 30 auf, in welche die zu verpackende Kontaktlinse eingebracht und anschliessend eine Aufbewahrungsflüssigkeit, z.B. Saline, hineindispensiert wird. Danach wird eine Deckfolie auf das Basisteil 3 aufgelegt und mit diesem verbunden. Wie diese Verbindung von Basisteil und Deckfolie erfolgen kann, wird weiter unten noch genauer erläutert.

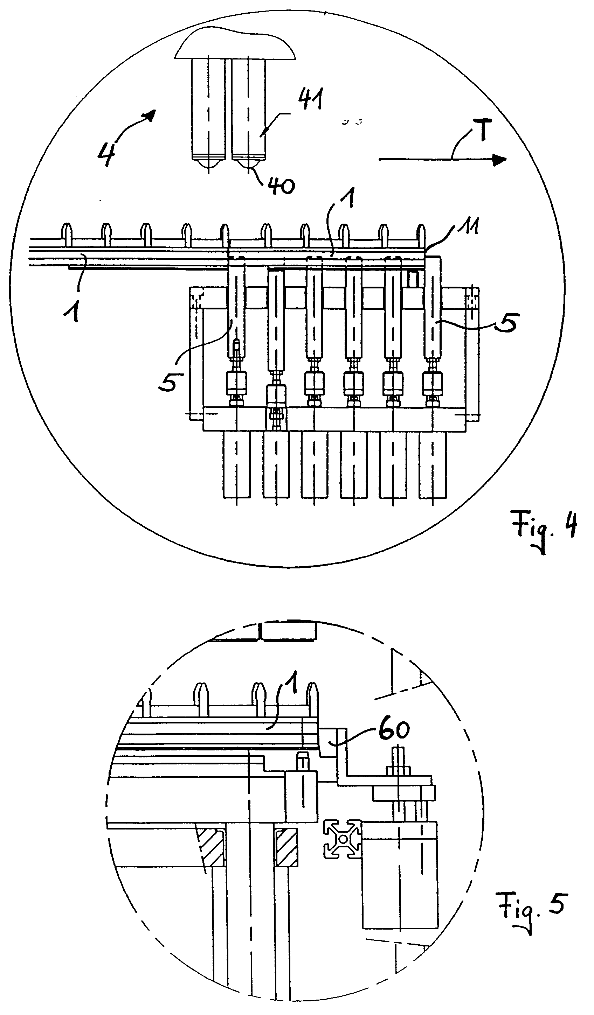

In Fig. 3 erkennt man nun sehr schematisch eine Vorrichtung zum Verpacken von Kontaktlinsen, bzw. wesentliche Bestandteile davon. In Fig. 4 und Fig. 5 sind weitere Einzelheiten dieser Vorrichtung zu erkennen. Bei der nachfolgenden Erläuterung wird der Einfachheit halber nur anhand von einer Transportbahn erläutert, wie die Kontaktlinsen in die Basisteile eingebracht werden und wie die nachfolgende Verpackung erfolgt. in der Praxis können mehrere solcher Transportbahnen, z.B. fünf solcher Transportbahnen, parallel zueinander angeordnet sein.

Zunächst wird die Kontaktlinse, die an einem Greifer 4 bzw. an der konvexen Fläche 40 eines Greiferarms 41 anhaftet (Fig. 4) - z.B. durch Erzeugung von Unterdruck (im Greiferarm bzw. in einem im Greiferarm vorgesehenen Kanal), mit dessen Hilfe die Kontaktlinse an die konvexe Fläche 40 angesaugt wird - über eine Vertiefung 30 des Basisteils 3 transportiert. In dem Moment, in dem die Kontaktlinse oder die Kontaktlinsen in die Vertiefungen 30 hinein abgelegt werden sollen, wird anstelle von Unterdruck ein Überdruck (im Greiferarm bzw. in dem Kanal) erzeugt, mit dessen Hilfe die Kontaktlinse bzw. die Kontaktlinsen von der konvexen Fläche 40 abgelöst werden, so dass sie aus sehr geringer Höhe (in Fig. 4 ist dies völlig übertrieben dargestellt, aber dadurch übersichtlicher) in die jeweilige Vertiefung 30 hineingleiten bzw. hineinfallen können. Das Basisteil 3 selbst ist in einem Aufnahmeelement 2 eines Trägers 1 angeordnet (wie bereits anhand von Fig. 1 erläutert), und dieser Träger 1 befindet sich in einer wohldefinierten Position relativ zur Position des Greifers 4 bzw. der Greiferame 41.

In Fig. 4 erkennt man zwei solcher Träger 1, die auf einer Bahn hintereinander folgend angeordnet sind. Oberhalb dieser Träger 1 ist der Greifer 4 mit den zwei Greiferarmen 41 und den konvexen Flächen 40 zu erkennen. Die Transportrichtung, in welcher die Träger 1 transportiert werden, ist in Fig. 4 wie auch in Fig. 3 durch den Pfeil T gekennzeichnet. Weiterhin erkennt man in Fig. 4 nach oben und unten verstellbare Anschläge 5. Der Träger 1 weist entsprechend auf seiner Unterseite eine Nut 10 auf (siehe auch Fig. 1), die sich in Transportrichtung praktisch über die gesamte Länge des Trägers 1 erstreckt. Lediglich am - in Transportrichtung betrachtet - vorderen Ende 11 des Trägers 1 erstreckt sich die Nut 10 nicht ganz bis zum vorderen Ende 11 des Trägers, da das vordere Ende 11 ja gegen den jeweiligen Anschlag 5 stösst und von diesem Anschlag 5 solange in einer fixen Position gehalten wird, bis dieser Anschlag von der oberen Stellung in die untere Stellung bewegt wird. Sobald der jeweilige Anschlag 5, gegen den das vordere Ende 11 des Trägers 1 stösst, in die untere Stellung bewegt wird, wird der Träger 1 in Transportrichtung T bewegt, bis sein vorderes Ende 11 gegen den nächsten in der oberen Stellung sich befindenden Anschlag 5 stösst. Anschliessend kann der zuvor nach unten bewegte Anschlag 5 wieder nach oben bewegt werden, da er den weiteren Transport des Trägers 1 nicht mehr behindert, da er in der oberen Stellung in die Nut 10 hineinragt.

Der Einfachheit halber stelle man sich zunächst vor (anders als in Fig. 4 dargestellt), dass kein Träger 1 vorhanden ist und ein Träger 1 von der linken Seite her einläuft. Nun können mehrere Fälle auftreten. Im ersten Fall haftet an dem rechten Greiferam 41 bzw. an dessen konvexer Fläche 40 eine Kontaktlinse an, die keine Defekte aufweist und die demzufolge in die Vertiefung 30 eines Basisteils 3 hinein abgelegt werden soll. Für diesen Fall wird der ganz links angeordnete Anschlag in die untere Stellung bewegt, während die anderen Anschläge sich zunächst in der oberen Stellung befinden. Der Träger 1 wird dann solange in Transportrichtung T transportiert, bis sein vorderes Ende 11 gegen den ersten - von links her betrachtet sich in der oberen Stellung befindenen Anschlag 5 stösst. Da der ganz links angeordnete Anschlag sich beim Einlaufen in der unteren Stellung befindet, stösst das vordere Ende 11 des Trägers 1 gegen den - von links her betrachtet - zweiten Anschlag.

Unter den beiden Greiferarmen 41 sind nun zwei Basisteile 3 (Fig. 2) der Verpackung mit den entsprechenden Vertiefungen 30 angeordnet. Nun können an beiden Greiferarmen 41 bzw. an deren konvexen Flächen 40 Kontaktlinsen ohne Defekte anhaften. Ist dies der Fall, so werden beide Kontaktlinsen (durch Erzeugung von Überdruck in den Greiferarmen bzw. in Kanälen darin) in die jeweiligen Vertiefungen 30 der Basisteile 3 der Verpackung abgelegt. Anschliessend wird abgefragt, an welchen der beiden Greiferarme, die im nächsten Schritt über dem Träger 1 zu liegen kommen, Kontaktlinsen ohne Defekte anhaften.

Haftet zumindest an dem rechten Greiferarm bzw. an dessen konvexer Fläche eine defektfreie Kontaktlinse an (egal, ob an dem linken Greiferarm eine defektfreie Kontaktlinse anhaftet), so werden der - von links her betrachtet - zweite und dritte Anschlag in die untere Position bewegt, so dass der Träger um zwei Basisteile weiter in Transportrichtung T bewegt wird, bis sein vorderes Ende gegen den von links her betrachtet vierten Anschlag stösst. Haftet nur an dem linken Greiferam eine defektfreie Kontaktlinse an, so wird nur der - von links her betrachtet - zweite Anschlag in die untere Position bewegt (nicht hingegen der dritte Anschlag), und der Träger wird nur um ein Basisteil in Transportrichtung weitertransportiert, bis das vordere Ende des Trägers gegen den - von links her betrachtet - dritten Anschlag stösst. Haftet hingegen an keinem der beiden Greiferarme eine defektfreie Kontaktlinse, so bleiben die Anschläge in unveränderter Position, und es wird keine Kontaktlinse abgelegt (die Vertiefungen der Basisteile, die sich in diesem Fall unter den Greiferarmen befinden, sind ja auch mit defektfreien Kontaktlinsen belegt). Anschliessend wird wieder abgefragt, an welchen der beiden im nächsten Schritt über dem Träger angeordneten Greiferarmen Kontaktlinsen ohne Defekte anhaften, und dementsprechend werden die Anschläge bewegt oder auch nicht. Es wird also immer nur in die in Transportrichtung betrachtet vorderste noch nicht mit einer Kontaktlinse belegte Vertiefung eines Basisteils hinein eine defektfreie Kontaktlinse eingebracht.

Gemäss der Darstellung in Fig. 4 befinden sich demzufolge in den - in Transportrichtung betrachtet - ersten vier Basisteilen der Verpackung, die im rechten Träger angeordnet sind, bzw. in den Vertiefungen dieser Basisteile, defektfreie Kontaktlinsen. Geht man davon aus, dass nun an beiden Greiferarmen 41 bzw. an deren konvexen Flächen 40 defektfreie Kontaktlinsen angehaftet haben, die nun ebenfalls in die Vertiefungen abgelegt worden sind, so befindet sich dann in jedem Basisteil auf dem rechten Träger eine defektfreie Kontaktlinse. Ausserdem befindet sich auch in dem ersten Basisteil auf dem linken Träger eine defektfreie Kontaktlinse. Während nun also der ganz rechts angeordnete Anschlag in die untere Position bewegt wird und somit den Weitertransport des rechten Trägers zu einer Station ermöglicht, in welcher in die einzelnen Vertiefungen hinein eine Aufbewahrungslösung, z.B. Saline, dispensiert wird, wird ausserdem abgefragt, an welchen der beiden im nächsten Schritt über dem mit Kontaktlinsen zu bestückenden Träger angeordneten Greiferarmen defektfreie Kontaktlinsen anhaften. Dementsprechend werden dann - wie oben erläutert - wieder die Anschläge bewegt oder auch nicht.

Sind sämtliche Basisteile 3 auf einem Träger 1 mit defektfreien Kontaktlinsen bestückt, wird dieser Träger weitertransportiert und es wird - wie bereits erwähnt - in jede der Vertiefungen hinein ein vorgegebenes Volumen einer Aufbewahrungslösung, z.B. Saline, dispensiert.

Dies ist in Fig. 3 symbolisch durch einen Pfeil S angedeutet. Auf dem weiteren Transportweg in Transportrichtung T gelangt der Träger mit den mit Kontaktlinsen bestückten Basisteilen, in die auch Saline hinein dispensiert worden ist, dann in eine Station oder Vorrichtung 6, in welcher einerseits ein zusammenhängendes Stück aus einer Deckfolie F ausgestanzt und auf die Basisteile 3 aufgelegt wird, was durch einen entsprechenden Pfeil in Fig.3 symbolisiert ist, und in welcher Vorrichtung 6 andererseits im Anschluss daran diese Deckfolie F mit den Basisteilen 3 verbunden wird.

In Fig. 5, welche die Einzelheit V der Fig. 3 vergrössert darstellt, erkennt man, dass der Träger 1, der in die Vorrichtung 6 gelangt ist, auf seinem Weg in Transportrichtung T gegen einen Anschlag 60 stösst, der ebenfalls in Richtung nach oben und unten bewegbar ist. In der oberen Stellung, wie sie in Fig. 5 gezeigt ist, dient der Anschlag 60 dazu, dass die in die Vorrichtung 6 einlaufenden Träger 1 vorübergehend in einer wohldefinierten Position fixiert werden. In den auf dem Träger 1 angeordneten Aufnahmeelemente 2 (Fig. 1) befinden sich jeweils ein Basisteil 3, in dessen Vertiefung 30 sich Saline und eine in der Saline angeordnete Kontaktlinse befinden. Ausserdem erstreckt sich ein zusammenhängendes Stück einer Deckfolie F über sämtliche Basisteile 3 eines Trägers 1 hinweg. Mit anderen Worten heisst dies, dass nun die Deckfolie F mit dem Basisteil 3 verbunden werden kann.

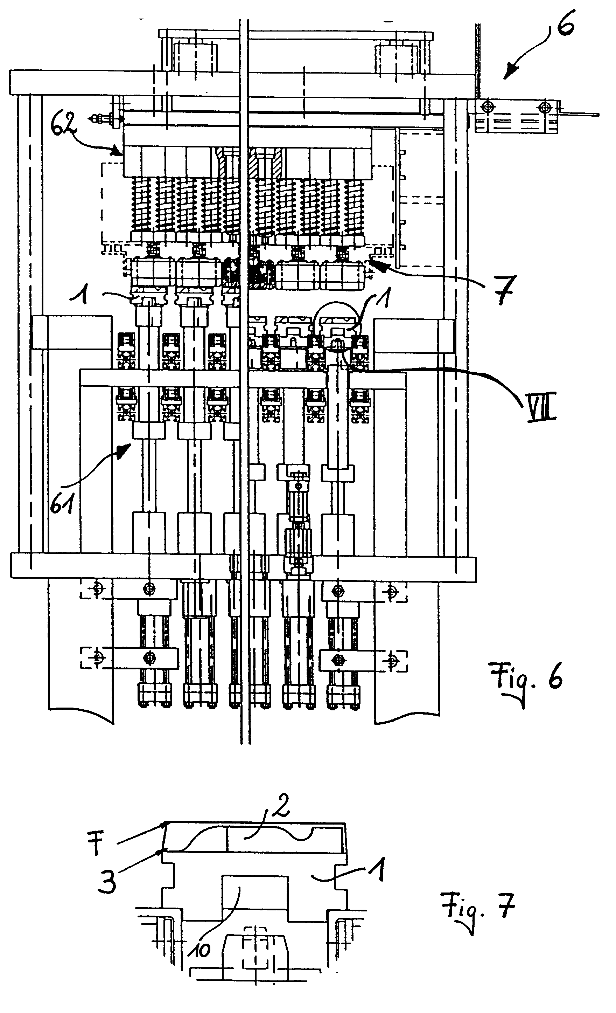

Zum Verbinden der im geschilderten Beispiel fünf Basisteile 3 mit der Deckfolie F wird nun der gesamte Träger 1 z.B. pneumatisch angehoben und gegen eine entsprechende Anzahl einzelner Nutzen 7 gedrückt. Dies ist im Prinzip aus den beiden Hälften der Fig. 6 gut zu erkennen. Fig. 6 stellt nämlich einen schematisierten Schnitt durch die Vorrichtung 6 senkrecht zur Transportrichtung T dar, der Betrachter schaut also in Transportrichtung. Man erkennt an dieser Darstellung, dass hier fünf Transportbahnen parallel zueinander angeordnet sind, und dass auf allen diesen Transportbahnen sich jeweils ein Träger 1 mit den entsprechenden Basisteilen in der Vorrichtung 6 befindet.

Während sich aber in der rechten Hälfte in Fig. 6 die Träger 1 in der unteren Stellung befinden, in der also kein Kontakt zwischen der Deckfolie F und den Nutzen 7 besteht, befinden sich in der linken Hälfte der Fig. 6 die Träger 1 in der oberen Stellung. Dieses Anheben der Träger 1 in der Vorrichtung 6 kann mittels eines pneumatischen Antriebs 61 erfolgen. Die Nutzen 7 sind an einem gemeinsamen Geste 62 praktisch ortsfest aufgehängt, sodass durch das Anheben der Träger 1 mittels des pneumatischen Antriebs 61 die Nutzen 7 in Kontakt mit der Deckfolie F kommen und in noch genauer zu erläuternder Art und Weise die Deckfolie F mit dem Basisteil verbinden. Eine auf diese Weise erhältliche Verpackung ist in Fig. 7 zu erkennen, welche die Einzelheit VII der Fig. 6 darstellt. Man erkennt in Fig. 7 den Träger 1 mit der Nut 10, das auf dem Träger 1 befindliche Aufnahmeelement 2 und das darin angeordnete Basisteil 3 mit der darauf befindlichen Deckfolie F.

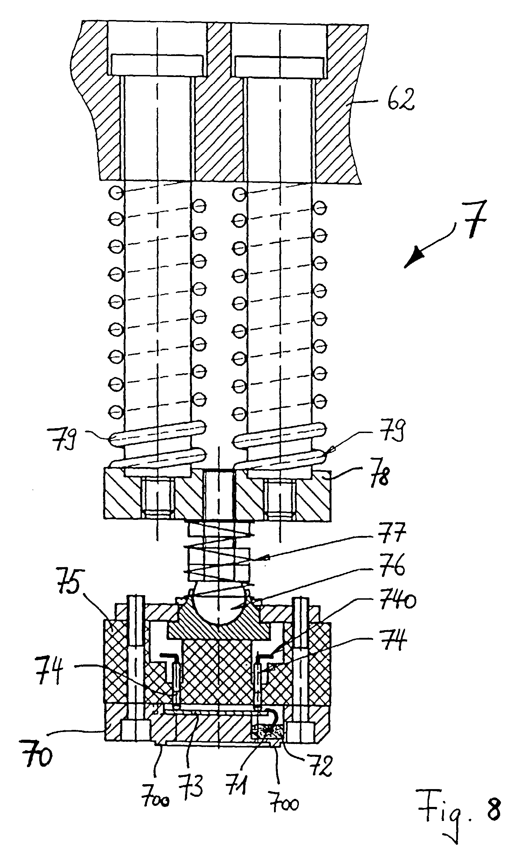

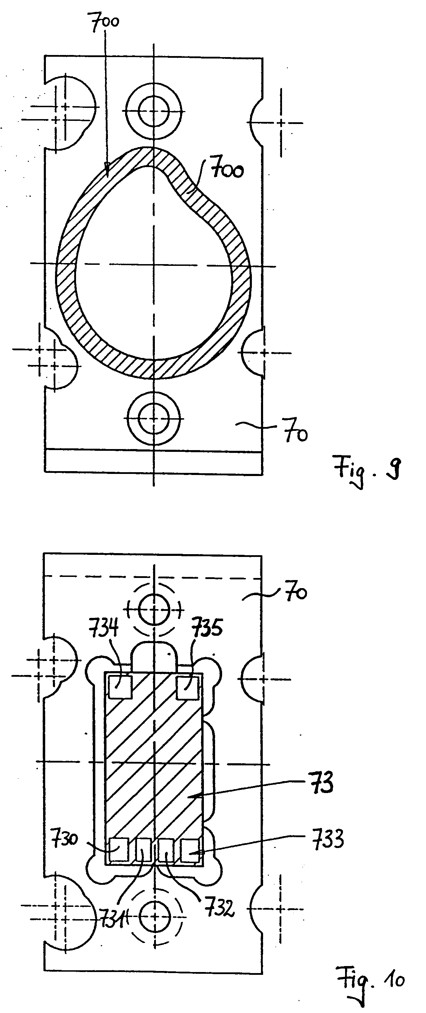

Fig. 8 zeigt nun einen Nutzen 7 und dessen einzelne Bestandteile. Man erkennt, dass der Nutzen 7 eine Kontaktplatte 70 (z.B. aus Stahl) mit einer - speziell im Vergleich zu den bekannten trägen grossvolumigen Kontaktplatten - geringen Wärmekapazität aufweist, deren Andruckfläche 700 beim thermischen Verbinden von Basisteil und Deckfolie in Kontakt mit der dem Basisteil abgewandten Fläche der Deckfolie kommt und die Deckfolie entlang der Andruckfläche 700 mit dem Basisteil verbindet. Die Gestalt der Andruckfläche, die in etwa die Form eines Tropfens aufweist, ist besonders gut aus Fig. 9 erkennbar, in welcher die Kontaktplatte in einer Ansicht von unten dargestellt ist (die Andruckfläche 700 ist dabei geschnitten dargestellt).

Weiterhin erkennt man in Fig. 8, dass auf der Rückseite der Kontaktplatte 70 ein Temperaturfühler 71 ganz nahe an der Andruckfläche 700 in eine sehr gut wärmeleitende Klebemasse 72 (z.B: in einen Kunststoff mit den entsprechenden Eigenschaften) eingebettet ist. Die Anordnung des Temperaturfühlers 71 in der sehr gut wärmeleitenden Klebemasse 72 ist besonders gut aus Fig. 11 ersichtlich, in welcher ein Schnitt durch die Kontaktplatte 70 dargestellt ist. Der Temperaturfühler 71 dient zur Messung der Temperatur in unmittelbarer Nähe der Andruckfläche, wodurch die Temperatur an der Andruckfläche 700 immer sehr genau bekannt ist und überwacht bzw. nachgeführt werden kann. Eine innerhalb eines vorgegebenen Toleranzbereichs liegende Temperatur an der Andruckfläche (Siegeltemperatur) ist wichtig für eine zuverlässige Verbindung von Basisteil und Deckfolie, da diese Vebindung ja den eingangs genannten hohen Anforderungen entsprechen muss.

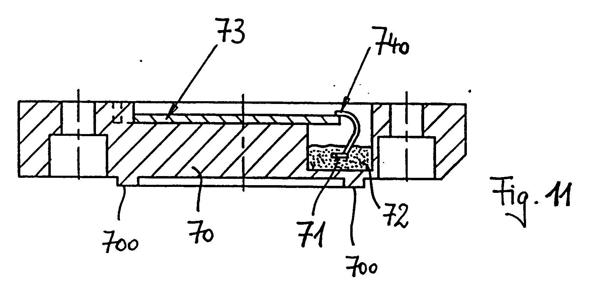

Auf der Rückseite der Kontaktplatte 70 ist gemäss Fig. 8 ferner eine Heizplatte in Form eines Keramikplättchens 73 vorgesehen. Das Keramikplättchen 73 ist in eine Aussparung auf der Rückseite der Kontaktplatte 70 mittels eines sehr gut wärmeleitenden Klebers eingeklebt (die Wärme des Keramikplättchens muss an die Kontaktplatte 70 weitergegeben werden). Dies ist aus Fig. 10 gut zu erkennen, in welcher eine Aufsicht auf die Rückseite der Kontaktplatte 70 dargestellt ist. Man erkennt, dass das eingeklebte Keramikplättchen 73 mehrere elektrisch leitende - z.B. metallische - Anschlussflächen 730,731,732,733,734,735 aufweist. Die in Fig. 10 am oberen Ende angeordneten Anschlussflächen 734,735 dienen der Abnahme eines elektrischen Signals, welches der Temperatur in unmittelbarer Nähe der Anschlussfläche 700 entspricht. Am unteren Ende des Keramikplättchens 73 dienen die beiden äusseren Anschlussflächen 730,733 der Spannungsversorgung, da das Keramikplättchen 73 mittels einer konventionellen elektrischen Heizung (z.B. einer Widerstandsheizung, nicht dargestellt) erwärmt wird. Die beiden inneren Anschlussflächen 731,732 dienen der Messung der Temperatur des Keramikplättchens 73, um dieses vor Überhitzung zu schützen. Die jeweiligen elektrischen Potentiale der Anschlussflächen können mit Hilfe von Federkontaktstiften 74 (siehe Fig. 8) abgegriffen und mittels Zuleitungen 740 einer schnellen Regelung (nicht dargestellt) zugeführt werden, auch die Spannungsversorgung für die Heizung kann mittels solcher Federkontaktstifte 74 erfolgen. Schliesslich ist die Kontaktplatte 70 auf ihrer Rückseite mit einem Isolierkörper 75 verbunden, damit die Wärme der Kontaktplatte 70 nicht an die Umgebung abgegeben wird.

Der Nutzen 7 weist gemäss Fig. 8 ferner ein kugeliges Gelenk 76 auf, um welches herum er gegen die Kraft einer schwachen Rückstellfeder 77, die den Nutzen in die in Fig. 8 gezeigte Ausgangsstellung zurückstellt, verschwenkbar gelagert ist. Dieses Gelenk ist besonders wichtig im Hinblick auf einen gleichmässigen Druck entlang der jeweiligen Verbindungsfläche von Basisteil und Deckfolie. Eine genaue Temperaturführung - wie zuvor beschrieben - ist nämlich nur eine Voraussetzung für eine gute Verbindung von Basisteil und Deckfolie, eine weitere Voraussetzung für eine gute Verbindung ist ein möglichst gleichmässiger Druck entlang der Verbindungsfläche. Man kann sich leicht vorstellen, dass die einzelnen Basisteile mit der aufliegenden Deckfolie in der Praxis nicht immer genau parallel zur Andruckfläche 700 des jeweiligen Nutzens 7 angeordnet sind, zumal ohnehin immer fünf solcher Basisteile gleichzeitig auf einem Träger angeordnet sind und gleichzeitig mit der Deckfolie verbunden werden. Andererseits sollen alle fünf Verbindungen den eingangs genannten hohen Anforderungen genügen. Ist nun jeder Nutzen 7 gelenkig gelagert, so kann der Nutzen bei einem nicht genau parallel zur Andruckfläche 700 des Nutzens angeordneten Basisteil beim Andrücken des Basisteils mit aufliegender Deckfolie gegen die Andruckfläche 700 um dieses Gelenk 76 herum verschwenken, sodass bei verschwenktem Nutzen der Druck entlang der Verbindungsfläche von Basisteil und Deckfolie sehr gleichmässig ist. In der Praxis sind diese Verschwenkungen vom Betrag her zwar gering, für eine qualitativ hochstehende Verbindung von Basisteil und Deckfolie aber wichtig.

Das Gelenk 76 selbst (bzw. dessen Fortsetzung) ist starr mit einer Druckplatte 78 verbunden, welche gegen die Kraft von zwei (im Vergleich zur Feder 77) starken Federn 79 verstellbar ist. Die Federn 79 sind jeweils um eine mit der Druckplatte 78 verbundene Aufhängungsstange herum angeordnet und zwischen dem ortsfest angeordneten Gestell 62 und der Druckplatte 78 eingespannt. Jeder Nutzen 7 (im erläuterten Beispiel sind entlang jeder Bahn fünf solcher Nutzen vorgesehen, um die fünf gleichzeitig auf einem Träger 1 befindlichen Basisteile 3 mit den darauf befindlichen Deckfolien zu verbinden) ist selbständig an dem gemeinsamen, ortsfest angeordneten Gestell 62 aufgehängt.

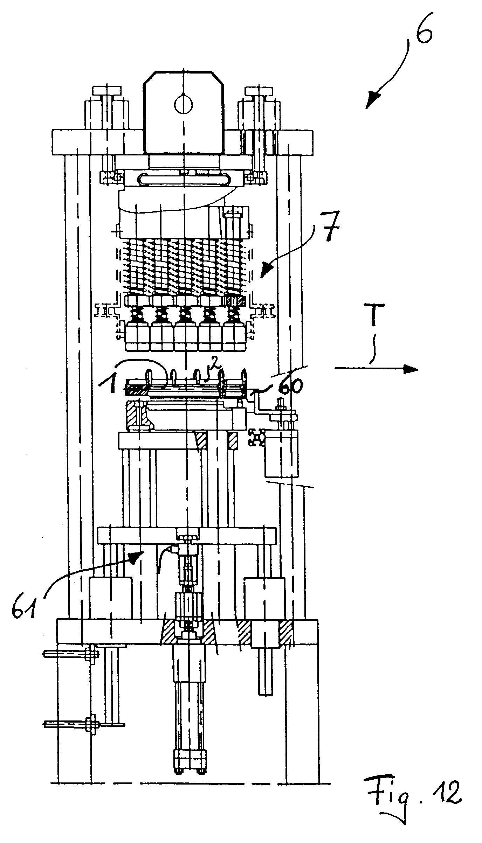

Eine solche Anordnung von fünf Nutzen 7 entlang einer Bahn ist aus Fig. 12 zu erkennen, welche einer teilweise geschnittenen Darstellung durch die Vorrichtung 6 - und zwar in Tranpsportrichtung - entpspricht. In Fig. 12 erkennt man den gegen den Anschlag 60 in die Vorrichtung 6 eingelaufenen Träger 1, auf welchem fünf Aufnahmeelemente angeordnet sind, in denen sich jeweils ein Basisteil mit einer Kontaktlinsen in Saline befindet. Auf den Basisteilen liegt die mit den Basisteilen zu verbindende Folie auf. Der Träger 1 wird nun mittels des bereits bei der Erläuterung der Fig. 6 angesprochenen pneumatischen Antriebs 61 angehoben, sodass die Basisteile mit der aufliegenden Folie in Kontakt mit den Nutzen 7 kommen.

Beim Anheben des Trägers 1 verschwenken zunächst die einzelnen Nutzen um das Gelenk 76 für den Fall, dass das jeweilige Basisteil nicht genau parallel zur Andruckfläche 700 angeordnet ist, und anschliessend wird die Andruckfläche 700 gegen das Basisteil mit der aufliegenden Deckfolie gedrückt. Durch die für eine fest vorgegebene Zeit mittels der Andruckfläche übertragene Temperatur und den Druck wird die Deckfolie mit dem Basisteil thermisch verbunden. Der Träger 1 wird dabei um einen fest vorgegebenen Weg angehoben, da aufgrund des Federgesetzes die gewünschte Andruckkraft, mit der die Andruckfläche 700 gegen Basisteil und Deckfolie drückt, über den Weg, um den der Träger 1 angehoben wird, gegeben ist. Ist der Träger um den vorgegebenen Weg angehoben worden, wird er für einen genau definierte Zeitraum in dieser Position gehalten (siehe linke Hälfte von Fig. 6). Dabei werden die Basisteile und die Deckfolie miteinander verbunden. Anschliessend wird der Träger 1 wieder abgesenkt (rechte Hälfte von Fig. 6) und die fertigen Verpackungen können der weiteren Bearbeitung zugeführt werden. Da die Folie im geschilderten Fall einstückig ist und sich auch über die Zwischenräume zwischen den einzelnen Basisteilen erstreckt, handelt es sich bei den fertigen Verpackungen des geschilderten Ausführungsbeispiels um Anordnungen von jeweils fünf miteinander verbundenen Verpackungen. Diese können dann der weiteren Verarbeitung zugeführt werden. Insbesondere können sie z.B. einem Magazin zugeführt werden, in welchem eine grössere Anzahl solcher Anordnungen von jeweils fünf Verpackungen angesammelt wird, bevor das gesamte Magazin dann einer Vorrichtung zum Sterilisieren, z.B. einem Autoklaven, zugeführt wird.

## Patentansprüche

1. Verfahren zum thermischen Verbinden eines Basisteils (3) einer Verpackung mit einer Deckfolie (F), insbesondere zum Verschweissen oder Versiegeln eines Basisteils einer Verpackung für Kontaktlinsen mit einer Deckfolie, bei welchem Verfahren die der Deckfolie zugewandte Kontaktfläche des Basisteils (3) und die entsprechende dem Basisteil zugewandte Kontaktfläche der Deckfolie (F) jeweils einen Kunststoff umfassen und beim thermischen Verbinden entlang einer Verbindungsfläche mechanisch gegeneinander gedrückt werden, wobei während der Erzeugung des mechanischen Drucks entlang der Verbindungsfläche gleichzeitig eine Einwirkung von Wärme auf die Verbindungsfläche stattfindet, sodass die Kontaktflächen von Basisteil und Deckfolie entlang der Verbindungsfläche thermisch verbunden werden, dadurch gekennzeichnet, dass zum Erzeugen des mechanischen Drucks und zum Einwirken der Wärme auf die Verbindungsfläche eine Kontaktplatte (70) mit geringer Wärmekapazität verwendet wird, die beim thermischen Verbinden gegen die der Kontaktfläche abgewandte Fläche der Deckfolie gedrückt wird, dass die Temperatur der Kontaktplatte (70) in unmittelbarer Nähe der Deckfolie (F) gemessen wird, und dass bei einer Abweichung der gemessenen Temperatur aus einem vorgegebenen Toleranzbereich um eine Solltemperatur heraus die Temperatur der Kontaktplatte (70) innerhalb sehr kurzer Zeit wieder in den vorgegebenen Toleranzbereich um die Solltemperatur hinein nachgeregelt wird.

2. Verfahren nach Anspruch 1, dadurch gekennzeichnet, dass beim thermischen Verbinden entlang der gesamten Verbindungsfläche ein vorgegebener, im wesentlichen gleichmässiger mechanischer Druck erzeugt wird.

3. Verfahren nach Anspruch 2, dadurch gekennzeichnet, dass zur Erzeugung des im wesentlichen gleichmässigen mechanischen Drucks entlang der Verbindungsfläche ein gelenkig aufgehängter Nutzen (7) verwendet wird, an dessen dem Basisteil (3) der Verpackung zugewandten Ende die Kontaktplatte (70) angeordnet ist.

4. Verfahren nach Anspruch 3, dadurch gekennzeichnet, dass ein gegen die Kraft einer Feder (79) in Richtung auf ein räumlich fest angeordnetes Gestell (62) zu bewegbar aufgehängter Nutzen (7) verwendet wird.

5. Verfahren nach einem der Ansprüche 1 bis 4, dadurch gekennzeichnet, dass mehrere Basisteile (3) in einer Aufnahmeeinrichtung (1,2) gleichzeitig bereitgestellt werden, dass mehrere an einem gemeinsamen ortsfesten Gestell (62) gelenkig aufgehängte Nutzen (7) verwendet werden, und dass mehrere Basisteile (3) gleichzeitig mit einer Deckfolie (F) thermisch verbunden werden, indem die Aufnahmeeinrichtung (1) in Richtung auf die Nutzen zu bzw. auf das Gestell (62) zu bewegt wird, an dem die Nutzen (7) aufgehängt sind, sodass durch die Übertragung von Wärme und Druck auf die Kontaktflächen von Basisteil (3) und Deckfolie (F) diese entlang der Verbindungsfläche miteinander thermisch verbunden werden.

6. Vorrichtung zum thermischen Verbinden eines Basisteils (3) einer Verpackung mit einer Deckfolie (F), insbesondere zum Verschweissen oder Versiegeln eines Basisteils einer Verpackung für Kontaktlinsen mit einer Deckfolie, wobei das Basisteil (3) auf seiner der Deckfolie (F) zugewandten Kontaktfläche und die Deckfolie (F) auf ihrer dem Basisteil (3) zugewandten Kontaktfläche jeweils einen Kunststoff umfassen, mit einer Aufnahmeeinrichtung (1,2) zur Aufnahme des Basisteils (3) der Verpackung, auf welches die Deckfolie (F) aufgelegt wird, und mit einer Verbindungseinheit, welche einen heizbaren Nutzen (7) aufweist, der beim thermischen Verbinden von Basisteil und Deckfolie mit der Aufnahmeeinrichtung (1,2) so zusammenwirkt, dass mittels des Nutzens (7) entlang einer Verbindungsfläche auf die Kontaktflächen sowohl mechanischer Druck wie auch Wärme einwirkt, sodass sich Basisteil (3) und Deckfolie (F) entlang der Verbindungsfläche thermisch verbinden, dadurch gekennzeichnet, dass der Nutzen (7) eine heizbare Kontaktplatte (70) mit geringer Wärmekapazität aufweist, die an dem der Aufnahmeeinrichtung (1,2) zugewandten Ende des Nutzens (7) angeordnet ist und beim thermischen Verbinden entlang der Verbindungsfläche gegen die der Kontaktfläche abgewandte Fläche der Deckfolie (F) drückt, und dass an dieser Kontaktplatte (70) in unmittelbarer Nähe der Andruckfläche (700), die gegen die Deckfolie drückt, ein Temperaturfühler (71) angeordnet ist, der die Temperatur der Kontaktplatte (70) misst und bei einer Abweichung der Temperatur aus einem vorgegebenen Toleranzbereich um die Solltemperatur heraus sofort ein entsprechendes Signal erzeugt und an eine schnelle Regelung weiterleitet, welche die Temperatur der Kontaktplatte (70) sofort wieder in den vorgegebenen Toleranzbereich hinein regelt.

7. Vorrichtung nach Anspruch 6, dadurch gekennzeichnet, dass der Nutzen (7) gelenkig aufgehängt ist.

8. Vorrichtung nach Anspruch 7, dadurch gekennzeichnet, dass der Nutzen (7) auf der der Aufnahmeeinrichtung (1,2) abgewandten Fläche der Kontaktplatte (70) ein Heizelement (73) aufweist, welches die Kontaktplatte (70) heizt, sowie einen Isolierkörper (75), um die von dem Heizelement (73) erzeugte Wärme im wesentlichen vollständig an die Kontaktplatte (70) abzugeben und nicht an die Umgebung.

9. Vorrichtung nach Anspruch 8, dadurch gekennzeichnet, dass das Heizelement als dünnes Keramikplättchen (73) ausgebildet ist, auf welchem eine Widerstandsheizung mit zwei metallischen Anschlussflächen (730,733) einerseits und diese zwei Kontaktflächen miteinander leiterbahnartig verbindende Widerstandsleitungen andererseits vorgesehen sind.

10. Vorrichtung nach Anspruch 9, dadurch gekennzeichnet, dass die Spannungsversorgung zur Versorgung der Widerstandsheizung mit elektrischer Spannung zwei gefederte metallische Stifte (74) aufweist, die durch den Isolierkörper (75) hindurch geführt sind und deren Enden auf die Anschlussflächen (730,733) der Widerstandsheizung stossen.

11. Vorrichtung nach einem der Ansprüche 6 bis 10, dadurch gekennzeichnet, dass der Nutzen (7) gegen die Kraft einer Feder (79) in Richtung auf ein räumlich fest angeordnetes Gestell (62) zu bewegbar aufgehängt ist.

12. Vorrichtung nach einem der Ansprüche 6 bis 11, dadurch gekennzeichnet, dass mehrere Nutzen (7) vorgesehen sind, die an einem gemeinsamen ortsfesten Gestell (62) aufgehängt sind, dass ferner die Aufnahmeeinrichtung (1,2) mehrere Vertiefungen zur Aufnahme von Basisteilen (3) einer Verpackung aufweist, und dass die Aufnahmeeinrichtung mit sämtlichen Basisteilen mittels einer Stelleinheit (61) in Richtung der Nutzen und auf das Gestell (62) zu, an dem die Nutzen aufgehängt sind, bewegbar ist.

13. Verfahren zum Verpacken von Kontaktlinsen, bei welchem Verfahren eine Kontaktlinse in eine Vertiefung (30) eines Basisteils (3) einer Verpackung eingebracht wird, eine vorgegebene Menge einer Aufbewahrungsflüssigkeit (S) in die Vertiefung hinein dispensiert wird, eine thermisch mit dem Basisteil der Verpackung verbindbare Deckfolie (F) auf die Verpackung aufgelegt wird und anschliessend die Deckfolie (F) thermisch mit dem Basisteil (3) verbunden wird, dadurch gekennzeichnet, dass zum thermischen Verbinden von Basisteil (3) und Deckfolie (F) ein Verfahren gemäss einem der Ansprüche 1 bis 5 eingesetzt wird.

14. Verfahren nach Anspruch 13, dadurch gekennzeichnet, dass nach dem thermischen Verbinden von Basisteil (3) und Deckfolie (F) die so hergestellte Verpackung sterilisiert wird.

15. Verfahren nach Anspruch 14, dadurch gekennzeichnet, dass zum Sterilisieren die Verpackung einem Autoklaven zugeführt wird.

16. Verfahren nach Anspruch 14 oder 15, dadurch gekenzeichnet, dass mehrere Verpackungen vor dem Sterilisieren zunächst einem Magazin zugeführt werden, und dass die in dem Magazin enthaltenen Verpackungen dann anschliessend gemeinsam sterilisiert werden.

17. Vorrichtung zum Verpacken von Kontaktlinsen, mit einer Aufnahmeeinrichtung (1,2) zur Aufnahme eines Basisteils (3) einer Verpackung, mit einer Zuführeinrichtung (4) zum Einbringen einer Kontaktlinse in die Vertiefung (30) des Basisteils (3) hinein, mit einer Dispensiereinrichtung zum Dispensieren einer Aufbewahrungsflüssigkeit in die Vertiefung (30) des Basisteils hinein, mit einer Einrichtung zum Auflegen und Positionieren einer Deckfolie (F) auf das Basisteil (3), und mit einer Einrichtung (6) zum thermischen Verbinden von Basisteil (3) und Deckfolie (F), dadurch gekennzeichnet, dass die Einrichtung zum thermischen Verbinden von Basisteil und Deckfolie eine Vorrichtung gemäss einem der Ansprüche 6 bis 12 ist.

18. Vorrichtung nach Anspruch 17, dadurch gekennzeichnet, dass sie eine Einrichtung zum Sterilisieren der Verpackung nach dem Verbinden von Basisteil (3) und Deckfolie (F) umfasst.

19. Vorrichtung nach Anspruch 18, dadurch gekennzeichnet, dass die Einrichtung zum Sterilisieren der Verpackung ein Autoklav ist.

20. Vorrichtung nach Anspruch 18 oder 19, dadurch gekennzeichnet, dass ein Magazin vorgesehen ist, dem mehrere Verpackungen vor dem Sterilisieren zugeführt werden, und dass dieses Magazin dann in den Autoklaven zum Sterilisieren der Verpackungen eingebracht wird.
